# FASCICULE DE BREVET EUROPEEN

(11) **EP 4 248 065 B1**
(45) Date de publication et mention de la délivrance du brevet: **01.04.2026**
(21) Numéro de dépôt: 21820673.8
(22) Date de dépôt: 17.11.2021
(51) Int. Cl.: F01D 5/02, F01D 5/06, F01D 11/00

(54) **ENSEMBLE D'ÉLÉMENTS DE ROTOR DE TURBOMACHINE ÉQUIPÉ DE DISPOSITF D'ÉTANCHÉITÉ**
ROTORELEMENTANORDNUNG EINES TURBINENMOTORS MIT EINER DICHTUNGSVORRICHTUNG
TURBINE ENGINE ROTOR ELEMENT ASSEMBLY EQUIPPED WITH A SEALING DEVICE

(30) Priorité: 20.11.2020 FR 2011933
(43) Date de publication de la demande: 27.09.2023
(73) Titulaire: SAFRAN AIRCRAFT ENGINES, 75015 Paris (FR)
(72) Inventeur: BENDERRADJI, Kamel, 77550 MOISSY-CRAMAYEL (FR); PARENT, Delphine Hermance Maxime, 77550 MOISSY-CRAMAYEL (FR); FRECHE, Pauline Anne, 77550 MOISSY-CRAMAYEL (FR); MATHIEU, Joël Robert, 77550 MOISSY-CRAMAYEL (FR); JABLONSKI, Laurent, 77550 MOISSY-CRAMAYEL (FR)
(74) Mandataire: Gevers & Orès
(86) Numéro de dépôt international: PCT/FR2021/052025
(87) Numéro de publication internationale: WO 2022/106779

(56) Documents cités:
- WO-A1-2005/052321
- FR-A1- 3 077 327

## Description

### Domaine de l'invention

La présente invention concerne un ensemble de turbomachine comprenant des éléments de rotor qui sont accouplés par un accouplement à dentures de type « curvic coupling ». Elle concerne également une turbomachine comprenant un tel ensemble et un procédé de montage d'un tel ensemble.

### Arrière-plan technique

L'art antérieur comprend le document FR-A1-3077327 qui décrit des éléments de rotor reliés entre eux par une liaison boulonnée pour assurer la transmission de couple entre eux. Ce document prévoit un anneau ayant des léchettes radiales d'étanchéité et un système anti-rotation de cet anneau par rapport à un des éléments rotor. Le système anti-rotation comprend des dents radiales prévues sur l'élément de rotor et des tenons axiaux portés par l'anneau. Cependant, cet assemblage n'est pas tout à fait satisfaisant.

Il est connu d'accoupler deux éléments de rotor s'étendant autour d'un axe longitudinal par un accouplement à dentures. Le premier élément comprend une série de dents axiales s'engageant avec une autre série de dents complémentaires du deuxième élément de manière à former l'accouplement à dentures.

Ce type d'accouplement est connu sous l'expression anglaise de « curvic coupling » ou de liaison crabot. Un tel accouplement permet d'une part, de faciliter l'assemblage entre le premier et le deuxième éléments, et d'autre part, d'assurer un centrage et un positionnement des premier et deuxième éléments l'un par rapport à l'autre de manière précise. Cet accouplement à dentures permet en outre la transmission de couple au travers de l'ensemble en rotation ainsi que des déplacements axiaux et radiaux relatifs entre les premier et deuxième éléments.

Des jeux peuvent apparaître en fonctionnement et/ou être dus à la configuration des dents au niveau de leurs sommets et des fonds des creux adjacents des dents correspondantes. Ces jeux peuvent créer un risque de fuite de fluide tel que de l'air circulant radialement à l'intérieur et/ou à l'extérieur de l'accouplement à dentures. '

L'air traversant l'accouplement pourrait créer des dilatations ou contractions thermiques des premier et deuxième éléments et ainsi réduire la durée de vie. De même, les fuites d'air qui proviendraient d'organes où l'air aurait subi une compression impliquent une perte d'énergie et impactent le rendement de la turbomachine.

Il est donc nécessaire de pallier ces risques de fuite au niveau de l'accouplement.

La présente invention a pour but de fournir une solution simple, efficace et économique pour empêcher la circulation de fluide d'un côté ou d'un autre de l'accouplement à dentures d'un d'ensemble rotor d'une turbomachine.

### Résumé de l'invention

Nous parvenons à cet objectif conformément à l'invention grâce à un ensemble de turbomachine comprenant un premier élément de rotor et un deuxième élément de rotor qui s'étendent autour d'un axe longitudinal X et qui sont couplés l'un à l'autre par l'intermédiaire d'un accouplement à dentures, le premier élément de rotor comprenant des dents et le deuxième élément de rotor comprenant des dents complémentaires qui s'étendent suivant l'axe longitudinal et qui forment l'accouplement à dentures, le premier élément de rotor et le deuxième élément de rotor comprenant respectivement une première bride radiale et une deuxième bride radiale qui sont annulaires et qui sont agencées en regard l'une de l'autre, l'ensemble comprenant un dispositif d'étanchéité configuré de manière à assurer une étanchéité de l'accouplement à dentures au niveau des première et deuxième brides.

Ainsi, cette solution permet d'atteindre l'objectif susmentionné. En particulier, le dispositif d'étanchéité est configuré de manière à reposer au moins en partie sur une portion d'une des brides et sur le chemin des fuites de fluide de sorte que la circulation d'un fluide tel que de l'air que ce soit à l'extérieur ou à l'intérieur de l'accouplement de denture est évitée. Les dentures qui permettent alors la bonne transmission du couple entre les deux éléments de rotor ont une durée de vie améliorée. Cela améliore également les performances de la turbomachine.

L'ensemble comprend également l'une ou plusieurs des caractéristiques suivantes, prises seules ou en combinaison :
- un dispositif de fixation configuré de manière à maintenir le dispositif d'étanchéité et les première et deuxième brides fermement ensemble.
- la première bride et la deuxième bride s'étendent chacune radialement vers l'intérieur de l'accouplement à dentures.
- la première bride comprend une gorge ouverte sur une première surface de celle-ci et le dispositif d'étanchéité est destiné à être logé au moins en partie dans la gorge.
- le dispositif d'étanchéité comprend une tôle annulaire ondulée.
- le dispositif d'étanchéité comprend un bouclier annulaire destiné à couvrir au moins en partie des extrémités libres des première et deuxième brides.
- le bouclier comprend une forme générale en U, le bouclier comprenant une portion longitudinale, une première branche et une deuxième branche.
- le bouclier comprend plusieurs secteurs d'anneau qui s'étendent chacun suivant une direction circonférentielle.
- le dispositif de fixation comprend une tige filetée destinée à traverser au moins un orifice traversant de la première bride et un trou traversant de la deuxième bride, le dispositif de fixation comprenant en outre des moyens de serrage destinés à être montés sur la tige filetée de manière à la rendre solidaire d'au moins une des première et deuxième brides.
- la première branche et la deuxième branche comprennent une pluralités de lumières qui sont destinées à être traversées par la tige filetée, la première branche et la deuxième branche comprenant des zones d'appui reposant chacune respectivement sur une deuxième surface de la première bride et de la deuxième bride.
- la première bride et la deuxième bride s'étendent chacune radialement vers l'extérieur de l'accouplement à dentures.
- la tôle annulaire est fendue.
- le dispositif d'étanchéité est monté entre les brides.
- le dispositif d'étanchéité est monté à l'extérieur des brides.

L'invention concerne une turbomachine comprenant au moins un ensemble de turbomachine présentant l'une quelconque des caractéristiques précédentes.

L'invention concerne également un aéronef comprenant au moins une turbomachine telle que susmentionnée.

L'invention concerne en outre un procédé de montage d'un ensemble de turbomachine tel que susmentionné, le procédé comprenant:
- une étape de fourniture du dispositif d'étanchéité, et
- une étape de mise en place du dispositif d'étanchéité au niveau des première et deuxième brides radiales pour entraver une circulation de fluide à travers l'accouplement à dentures.

Le procédé comprend également l'une ou plusieurs des caractéristiques ou étapes suivantes, prises seules ou en combinaison :
- une étape de montage du dispositif de fixation sur la première bride et la deuxième bride de manière à maintenir fermement le dispositif d'étanchéité et les première et deuxième brides fermement ensemble.
- l'étape de mise en place du dispositif d'étanchéité comprend une sous étape de mise en place du dispositif d'étanchéité dans la gorge de la première bride.
- l'étape de mise en place du dispositif d'étanchéité comprend une sous-étape de mise en place du dispositif d'étanchéité autour des première et deuxième brides radiales de manière à couvrir au moins les extrémités libres des première et deuxième brides.
- l'étape de mise en place du dispositif d'étanchéité comprend une sous étape consistant à l'engagement ou emboîtement des secteurs d'anneau l'un dans l'autre pour former le bouclier annulaire.
- l'étape de montage du dispositif de fixation comprend :
   --une sous étape d'insertion de la tige filetée dans le trou traversant de la deuxième bride,
   --une sous étape de serrage de la tige filetée sur la deuxième bride,
   --une sous étape d'insertion de la tige filetée montée sur la deuxième bride, dans l'orifice traversant de la première bride de manière que la deuxième bride soit en regard de la gorge,
   --une sous étape de serrage de la tige filetée sur la première bride de manière que les brides soient solidaires l'une avec l'autre.
- l'étape de montage dispositif de fixation comprend :
   - -une sous étape d'insertion de la tige filetée dans les lumières des première et deuxième branches du bouclier et dans les orifices et trous traversants des première et deuxième brides,
   - -une sous étape de serrage de la tige filetée sur les première et deuxième brides de manière que les brides soient en solidaires l'une avec l'autre.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue schématique, en coupe axiale et partielle d'un exemple de deux éléments de rotor d'une turbomachine qui sont accouplés ensemble par un accouplement selon l'invention ;
[Fig. 2] La figure 2 représente un exemple d'accouplement à dentures entre les deux éléments de rotor d'une turbomachine selon l'invention ;
[Fig. 3] La figure 3 représente un ensemble de turbomachine équipé d'un dispositif d'étanchéité et d'un dispositif de fixation entre deux brides radiales des éléments de rotor selon l'invention ;
[Fig. 4a] La figure 4a illustre, suivant une coupe transversale, un organe d'étanchéité, du dispositif d'étanchéité, qui présente une forme ondulée selon l'invention;
[Fig. 4b] La figure 4b illustre, suivant une vue en perspective, l'organe d'étanchéité de la figure précédente selon l'invention;
[Fig. 5] La figures 5 montre une deuxième bride d'un deuxième élément de rotor sur lequel est monté un organe de fixation selon l'invention ;
[Fig. 6] La figure 6 montre une première bride d'un premier élément de rotor et un exemple d'organe de serrage destiné à coopérer avec l'organe de fixation de la figure précédente selon l'invention;
[Fig. 7] La figure 7 représente un autre mode de réalisation d'un ensemble de turbomachine équipé d'un dispositif d'étanchéité et d'un dispositif de fixation entre un premier et un deuxième éléments de rotor selon l'invention;
[Fig. 8] La figure 8 est une vue de côté d'un exemple d'organe d'étanchéité annulaire destiné à coopérer avec des brides radiales des éléments de rotor selon l'invention ;
[Fig. 9] La figure 9 illustre en perspective et de manière partielle un premier secteur de l'organe d'étanchéité destiné à coopérer avec un deuxième secteur de l'organe d'étanchéité ;
[Fig. 10] La figure 10 illustre en perspective et de manière partielle le premier secteur de l'organe d'étanchéité engagé dans le deuxième secteur de l'organe d'étanchéité selon l'invention ; et
[Fig. 11] La figure 11 est un exemple d'organigramme d'un procédé de montage d'un dispositif d'étanchéité et de fixation dans l'ensemble de turbomachine selon l'invention.

### Description détaillée de l'invention

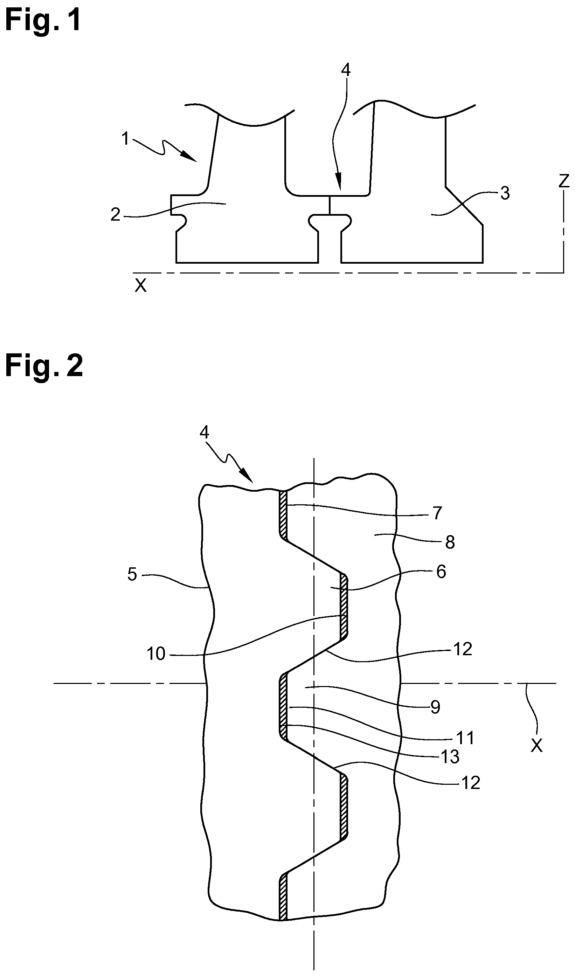

La figure 1 représente un ensemble de turbomachine 1 comprenant un premier élément 2 de rotor et un deuxième élément 3 de rotor qui s'étendent chacun autour d'un axe longitudinal X de la turbomachine. Le premier élément 2 de rotor et le deuxième élément 3 de rotor sont couplés l'un à l'autre par l'intermédiaire d'un accouplement à dentures 4 de type « *curvic coupling* »*.*

Ces premiers éléments 2, 3 de rotor sont par exemple un premier disque et un deuxième disque d'un compresseur haute pression de la turbomachine, ces disques tournant autour de l'axe longitudinal X. Bien entendu, ces deux éléments de rotor peuvent être deux arbres de turbomachine, tels qu'un arbre de soufflante et un arbre de turbine.

Les turbomachines comprennent de manière générale diverses canalisations ou orifices permettant de faire circuler des fluides tels que de l'air pour ventiler et/ou pressuriser des organes de la turbomachine (enceinte de lubrification de palier) ou de l'huile pour refroidir et/ou lubrifier d'autres organes de la turbomachine (palier de guidage). L'air peur provenir du flux d'air primaire circulant dans le compresseur basse pression. Dans le cas d'une turbomachine double flux (non représentée), celle-ci comprend typiquement une soufflante générant un flux d'air qui se divise, au niveau d'un bec de séparation, en un flux primaire et en un flux d'air secondaire. Le flux primaire traverse d'amont en aval, un compresseur basse pression, un compresseur haute pression, une chambre de combustion, une turbine haute pression et une turbine basse pression (qui ne sont pas représentés). Ces organes traversés par le flux primaire forment le générateur de gaz de la turbomachine. Le flux secondaire circule radialement à l'extérieur du générateur de gaz.

Dans la présente description les termes « amont », « aval », « axial » et « axialement » sont définis par rapport à la circulation des gaz dans la turbomachine et ici suivant l'axe longitudinal X. De même, les termes « radial », « radialement », « interne » et « externe » sont définis par rapport à un axe radial Z perpendiculaire à l'axe longitudinal X et au regard de l'éloignement par rapport à l'axe longitudinal X.

En référence à la figure 2, le premier élément 2 de rotor comprend une première virole 5 cylindrique qui s'étend axialement. La virole 5 comprend à son extrémité libre (ici aval) une première série annulaire de dents 6. Chaque dent 6 s'étend axialement. Les dents 6 sont espacées régulièrement autour de l'axe longitudinal et des creux 7 sont formés entre des dents 6 adjacentes suivant une direction circonférentielle.

Le deuxième élément 3 de rotor comprend une seconde virole 8 cylindrique qui s'étend également axialement. La deuxième virole 8 cylindrique comprend à son extrémité libre (ici amont) une deuxième série annulaire de dents complémentaires 9 qui sont complémentaires de celles du premier élément 2. Les dents complémentaires 9 s'étendent axialement. Comme pour les dents du premier élément 2, les dents complémentaires 9 sont espacées régulièrement et entre chaque paire de dents complémentaires adjacentes, suivant la direction circonférentielle, est formé un creux complémentaire 10. Dans le présent exemple, les viroles 5, 8 sont en regard l'une de l'autre. Celles-ci ont également sensiblement le même diamètre.

Les dents 6 et les dents complémentaires 9 sont orientées les unes vers les autres (dans des directions axiales mais opposées).

Les dents 6 du premier élément 2 sont destinées à s'engager dans les creux complémentaires 10 du deuxième élément 3 et les dents complémentaires 9 du deuxième élément 3 sont destinées à s'engager dans les creux 7 du premier élément 2. Cela forme un accouplement à dentures ou « curvic coupling » entre les premier et deuxième éléments 2, 3. Cet accouplement à dentures 4 permet la transmission de couple entre le premier et le deuxième éléments 2, 3.

Chaque dent 6 ou dent complémentaire 9 comprend un sommet 11 qui est relié à deux faces latérales 12. Les deux faces latérales 12 sont opposées suivant la direction circonférentielle. Les dents et dents complémentaires 6, 9 comprennent chacune également deux faces longitudinales opposées suivant l'axe radial et qui prolongent chacune axialement la surface des viroles 5, 8 respectives. Les creux 7 et creux complémentaires 10 comprennent un fond reliés aux faces latérales des dents 6 et dents complémentaires 9 respectivement. Les faces 12 sont, de manière avantageuse, planes. Avantageusement, chaque dent 6 ou dent complémentaire 9 présente une forme trapézoïdale.

Sur la figure 2, les sommets 11 de chaque dents/dents complémentaires 6, 9 sont en regard respectivement d'un fond 13 d'un creux/creux complémentaire 7, 10. Cependant, ici, le sommet 11 n'est pas en contact, ni en appui avec le fond des creux ce qui peut générer une circulation de fluide, en particulier de l'air. En effet, dans le cadre de disques de rotor de compresseur, l'air peut circuler radialement de l'extérieur vers l'intérieur des disques. Dans ce cas, l'air chaud provenant de la veine primaire traversant le compresseur et circulant vers l'intérieur des disques, peut induire une perte de rendement de la turbomachine. Les fuites d'air sont dues d'une part, aux jeux entre les premier et deuxième éléments de rotor pour le montage et d'autre part, aux faibles déplacements entre les dents. Inversement, de l'air peut circuler à l'intérieur de ceux-ci et traverser radialement l'accouplement à dentures 4 en direction des aubes portées par les disques, vers l'extérieur.

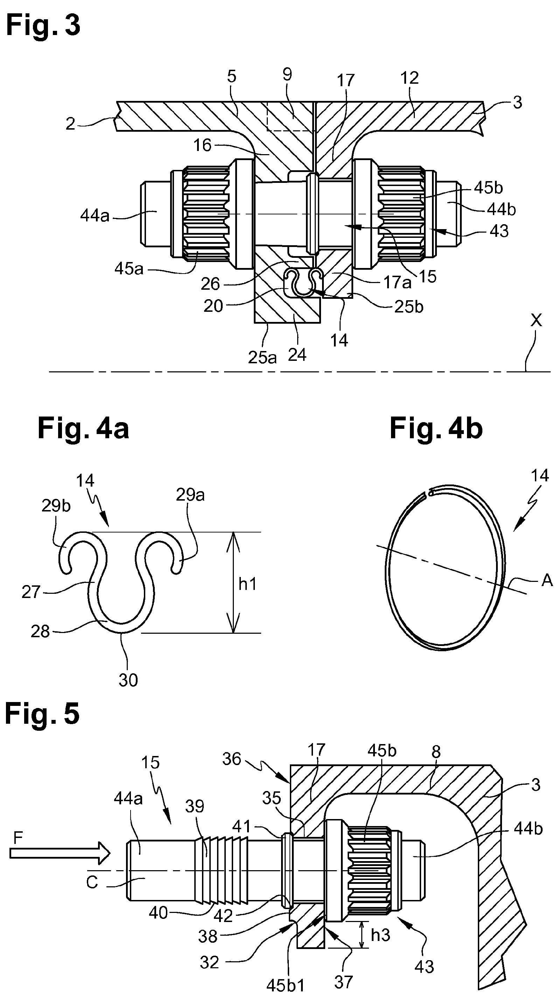

La figure 3 représente un dispositif d'étanchéité 14 qui est configuré de manière à entraver la circulation de fluide à travers l'accouplement à dentures 4. Ce dispositif d'étanchéité 14 coopère avec des brides radiales qui équipent les premier et deuxième éléments 2, 3 de rotor.

Les brides radiales sont fixées entre elles par un dispositif de fixation 15 qui a pour but de maintenir de manière optimale le dispositif d'étanchéité 14 en position. Le dispositif de fixation 15 permet également de serrer et de fixer l'ensemble pour que le dispositif d'étanchéité 14 soit maintenu efficacement dans sa position.

En particulier, le premier élément 2 comprend une première bride 16 annulaire qui s'étend depuis la première virole 5 radialement, ici vers l'intérieur. La première bride 16 est également annulaire et centrée sur l'axe longitudinal X. Le deuxième élément 3 comprend également une deuxième bride 17 annulaire qui s'étend radialement, ici aussi vers l'intérieur. De manière alternative, les première et deuxième brides 16, 17 s'étendent radialement vers l'extérieur depuis respectivement la première et la deuxième virole 5, 6. Les première et deuxième brides 16, 17 sont en regard l'une de l'autre avec un interstice ou jeux entre celles-ci.

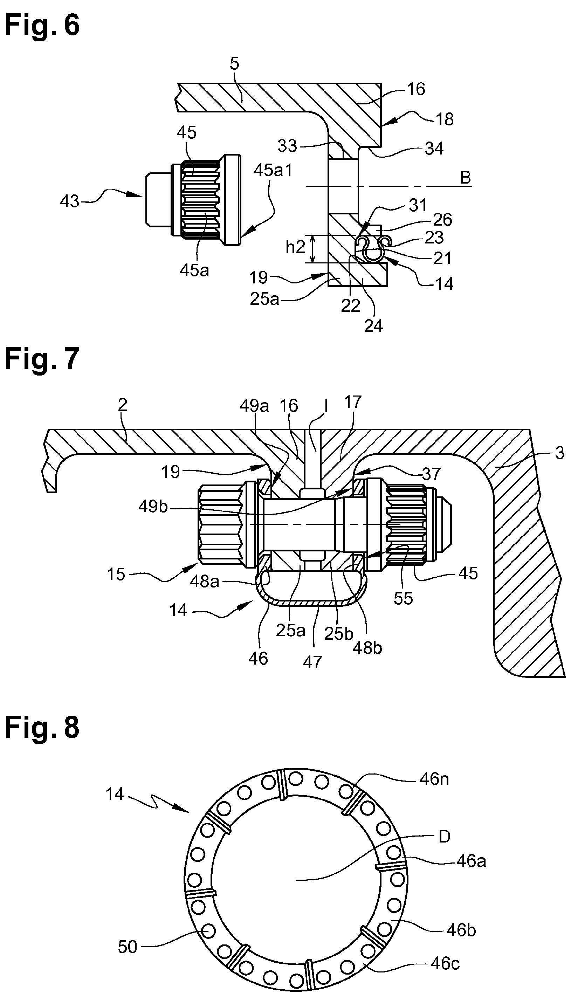

Sur les figures 3 et 6, la première bride 16 comprend une première surface 18 et une deuxième surface 19 qui sont opposées suivant l'axe longitudinal X. La première bride 16 comprend une gorge 20 annulaire qui est destinée à recevoir, au moins en partie, le dispositif d'étanchéité 14. La gorge 20 présente une section en forme de U et est aménagée dans la première surface 18 de la première bride 16. La gorge 20 est plus précisément ouverte sur la première surface 18. Celle-ci est ici d'axe coaxial avec l'axe longitudinal X. La gorge 20 comprend en outre un fond 21 depuis lequel s'étendent, suivant l'axe longitudinal, une première paroi 22 et une deuxième paroi 23 opposées (ici suivant l'axe radial). La première paroi 22 est portée par une patte axiale 24 (formée par un épaulement) qui est formée à l'extrémité libre 25a de la première bride 16. En d'autres termes, la première bride 16 radiale présente une forme générale en L suivant une section axiale. La patte axiale 24 est en regard radialement d'une nervure 26 qui s'étend suivant l'axe longitudinal. La nervure 26 porte la deuxième paroi 23 de la gorge 20. Dans cet exemple, la patte axiale 24 présente une longueur qui est supérieure à celle de la nervure 26 suivant l'axe longitudinal X.

En référence aux figures 3, 4a et 4b, le dispositif d'étanchéité 14 est formé par une tôle 27 qui est annulaire (360°) d'axe A. Toutefois, la tôle 27 est fendue de manière à faciliter son montage. La tôle 27 est destinée à être logée dans la gorge 20. Cette tôle 27 est ondulée. Celle-ci présente une section de forme sensiblement en Ω (oméga majuscule). La tôle 27 est ici disposée radialement entre la patte axiale 24 et la nervure 26. Dans le présent exemple, la tôle 27 comprend un corps 28 principal, annulaire, ayant deux extrémités circonférentielles l'une en regard de l'autre. La tôle 27 comprend également deux semelles (dites première semelle 29a et deuxième semelle 29b) incurvées de part et d'autre du corps 28 (suivant l'axe A). Le corps 28 présente un sommet 30 qui est destiné à prendre appui sur la première paroi 22 de la gorge 20. La première semelle 29a est destinée à prendre appui au moins en partie sur une première surface d'appui 31. Cette dernière est agencée entre la nervure 26 et le fond 21 de la gorge 20. La première surface d'appui 31 est en particulier un chanfrein qui présente un rayon de courbure complémentaire à celui de la première semelle 29a. La tôle 27 présente une hauteur h1 (cf. figure 4a) qui est sensiblement égale à la hauteur h2 (cf. figure 6) de la gorge 20. La hauteur h1 est mesurée entre le sommet 30 et un plan tangent aux points extrêmes des semelles 29a, 29b.

La deuxième semelle 29b est destinée à être en appui contre une deuxième surface d'appui 32 annulaire de la deuxième bride 17 qui est visible sur la figure 5. Une portion de la bride et la surface deuxième surface d'appui 32 sont destinées à fermer la gorge 20 pour emprisonner et maintenir la tôle 27 dans celle-ci. D'autre part, la deuxième surface annulaire 32 (en fermant la gorge 20) permet d'éviter que la pression venant en partie supérieure (radialement à l'extérieur de l'accouplement), en référence à l'axe radial sur la figure 1, ne pousse la tôle 27 radialement vers l'intérieur et que l'air ne s'échappe dans la partie inférieure (radialement à l'intérieur de l'accouplement). La patte axiale 24 permet également de contenir la tôle 27 au cas où celle-ci serait endommagée, voire cassée.

La tôle 27 est réalisée dans un acier.

En référence à la figure 6, la première bride 16 comprend également au moins un orifice 33 traversant celle-ci de part et d'autre suivant un axe B. L'axe B de l'orifice traversant est parallèle avec l'axe longitudinal X. La première bride 16 comprend plusieurs orifices 33 répartis régulièrement autour de l'axe longitudinal X. Chaque orifice 33 est destiné à recevoir au moins en partie le dispositif de fixation 15. La première bride 16 comprend en outre au moins un lamage 34 qui est coaxial avec l'orifice 33 traversant. Ce lamage 34 est annulaire. Le lamage 34 débouche dans la première surface 18 de la première bride 16.

En référence à la figure 5, la deuxième bride 17 comprend au moins un trou 35 traversant celle-ci de part et d'autre suivant l'axe longitudinal X. La deuxième bride 17 comprend plusieurs trous 35 répartis régulièrement autour de l'axe longitudinal X. En particulier, chaque trou 35 débouche sur une troisième surface 36 et sur une quatrième surface 37 qui sont opposées suivant l'axe longitudinal X. Une saillie 38 annulaire est agencée sur la troisième surface 36 de la deuxième bride 17. La saillie 38 s'étend en particulier axialement depuis la troisième surface 36 de la deuxième bride 17. Entre la saillie 38 et la troisième surface 36 est défini un chanfrein. Ce dernier correspond à la deuxième surface d'appui 32 sur lequel est en appui la deuxième semelle 29b de la tôle 27. L'axe de chaque trou 35 traversant est parallèle avec l'axe longitudinal. Dans le présent exemple, les axes de l'orifice traversant et du trou traversant sont coaxiaux. Chaque trou 35 est destiné à recevoir au moins en partie le dispositif de fixation 15.

Sur les figures 5 et 6, le dispositif de fixation 15 comprend au moins une tige filetée 39 ayant un corps sensiblement cylindrique droit d'axe C. Chaque tige filetée 39 est munie d'un filetage externe 40 et est destinée à s'engager dans les orifices et trous 33, 35 des première et deuxième brides 16, 17. La tige filetée 39 comprend un collet 41 qui est destiné à venir en butée contre la troisième surface 36 de la deuxième bride 17. Avantageusement, un lamage 42 coaxial avec le trou 35 traversant est réalisé dans la troisième surface 36 de la deuxième bride 17. Dans ce cas, le collet 41 vient en butée contre le fond du lamage 42. La deuxième surface d'appui 32 s'étend radialement à l'intérieur des lamages 42 sur la troisième surface 36. Le dispositif de fixation 15 comprend en outre des moyens de serrage 43 qui sont montés sur la tige filetée 39 de manière à fixer et serrer les première et deuxième brides16, 17 l'une contre l'autre.

La tige filetée 39 peut avantageusement être un goujon qui s'étend entre une première extrémité 44a et une deuxième extrémité 44b. Les moyens de serrage 43 peuvent être des écrous 45 qui comprennent chacun un corps pourvu d'un alésage intérieur. Un filetage intérieur est agencé dans l'alésage intérieur de manière à coopérer avec le filetage externe 40 de la tige filetée 39. Un premier écrou 45a présente une surface d'appui 45a1 qui repose sur la deuxième surface 19 de la première bride 16 et un deuxième écrou 45b présente une surface d'appui 45b1 qui repose sur la quatrième surface 37 de la deuxième bride 17. De manière alternative, la tige filetée 39 se présente sous la forme d'une vis comprenant une tête à une des extrémités et le moyen de serrage 43 comprend un écrou 45 monté sur l'autre extrémité (libre) de la vis.

Les figures 7 à 10 représentent un autre mode de réalisation du dispositif d'étanchéité 14 et du dispositif de fixation 15 des brides radiales 16, 17 des premier et deuxième éléments 2, 3. Dans la description qui va suivre, les éléments identiques ou sensiblement identiques et/ou avec les mêmes fonctions que ceux décrits précédemment sont désignés et représentés par les mêmes références numériques. Sur la figure 7, le premier élément 2 comprend une première bride 16 radiale et le deuxième élément 3 comprend une deuxième bride 17 radiale également. Les brides s'étendent radialement vers l'intérieur. La première bride 16 comprend plusieurs orifices 33 traversants et la deuxième bride 17 comprend plusieurs trous 35 traversants. Les trous et orifices traversants sont coaxiaux. Dans le présent mode de réalisation, l'ensemble est équipé d'un dispositif d'étanchéité 14 maintenu sur les brides et d'un dispositif de fixation 15 configurés de manière à maintenir de manière optimale le dispositif d'étanchéité en position et fermement sur les première et deuxième brides 16, 17 radiales.

Sur les figures 7 et 8 le dispositif d'étanchéité 14 comprend un bouclier 46 annulaire (360°) monté à la périphérie des brides 16, 17. Le bouclier 46 présente un axe D coaxiale avec l'axe longitudinal X. Le bouclier 46 a une portion couvrant au moins en partie les extrémités libres 25a, 25b des première et deuxième brides radiales. Le bouclier 46 présente une forme générale en U. En particulier, le bouclier 46 comprend une portion longitudinale 47 (formant le fond du U) et deux branches (dites première branche 48a et deuxième branche 48b) s'étendant respectivement à une extrémité de la portion longitudinale 47. Les deux branches 48a, 48b sont opposées l'une à l'autre et sont chacune définie dans un plan sensiblement perpendiculaire à l'axe D du bouclier 46. Le bouclier 46 comprend des zones d'appui 49a, 49b annulaires destinées à être en appui contre les brides 16, 17 radiales.

Comme nous pouvons le voir sur la figure 7, la première branche 48a du bouclier comprend une première zone d'appui 49a annulaire qui est en appui contre la deuxième surface 19 de la première bride 16. De même, la deuxième branche 48b du bouclier comprend une deuxième zone d'appui 49b annulaire qui est en appui contre la quatrième surface 37 de la deuxième bride 17. Les zones d'appui ou les branches radiales présentent une hauteur radiale prédéterminée. De manière avantageuse, cette hauteur radiale prédéterminée est comprise entre un tiers de la hauteur des brides radiales et la hauteur totale des brides radiales. Le bouclier 46 agit comme un couvercle en recouvrant les brides 16, 17 radiales et ainsi l'éventuel interstice I entre les brides 16, 17.

Le dispositif d'étanchéité 14 est réalisé dans un matériau métallique. Le bouclier 46 peut être réalisé en acier tout comme la tôle 27. Les branches 48a et 48b du bouclier 46 peuvent être flexibles pour faciliter la mise en place du bouclier 46 autour des brides 16, 17 et leur maintien également sur les brides 16, 17. De la sorte, la circulation du fluide à travers les brides 16, 17 et les dents/dents complémentaires 6, 9 des premier et deuxième éléments 2, 3 de rotor est entravée.

En référence à la figure 8, chaque première branche 48a et deuxième branche 48b du bouclier comprend une pluralité de lumières 50 qui traversent leurs parois de part et d'autres transversalement. Les lumières 50 sont réparties régulièrement autour de l'axe D du bouclier. Les lumières 50 de la première branche sont agencées en regard des lumières 50 de la deuxième branche. La tige filetée 39 du dispositif de fixation 15 est destinée à traverser les lumières 50 des première et deuxième branches 48a, 48b du bouclier 46 annulaire. Ici, les lumières 50 sont de forme circulaire. Celles-ci peuvent bien entendu présenter d'autres formes dès lors qu'elles autorisent le passage d'une tige filetée.

Les moyens de serrage 43 sont agencés de part et d'autre des brides 16, 17 radiales axialement. Ici, la face d'appui 45a1 du premier écrou 45 est au contact d'une première paroi 55 de la première branche. La première paroi 55 des branches est opposée à la deuxième paroi des branches qui est tournée vers l'intérieur du bouclier. Les deuxième et quatrième surfaces 19, 37 définissent les zones d'appui du bouclier 46. Dans ce mode de réalisation, la tige filetée 39 est une vis qui comprend une tête. Les moyens de serrage 43 comprennent un écrou 45 destiné à être monté sur l'extrémité distale de la vis.

Sur les figures 8 à 10, le bouclier 46 comprend plusieurs secteurs d'anneau 46a, 46b, 46c, 46n. Il y a huit secteurs d'anneau dans le présent exemple. Chaque secteur d'anneau s'étend suivant une longueur circonférentielle entre deux extrémités circonférentielles (dites première extrémité circonférentielle 51a et deuxième extrémité 51b circonférentielle). Les extrémités circonférentielles 51a, 51b délimitent des ouvertures 52 (ou entrefer) débouchant à l'intérieur du secteur. La longueur circonférentielle correspond à une portion angulaire comprise entre 25° et 50°. Chaque secteur d'anneau 46a, 46b, 46c, 46n du bouclier 46 comprend une section transversale de forme générale en U également.

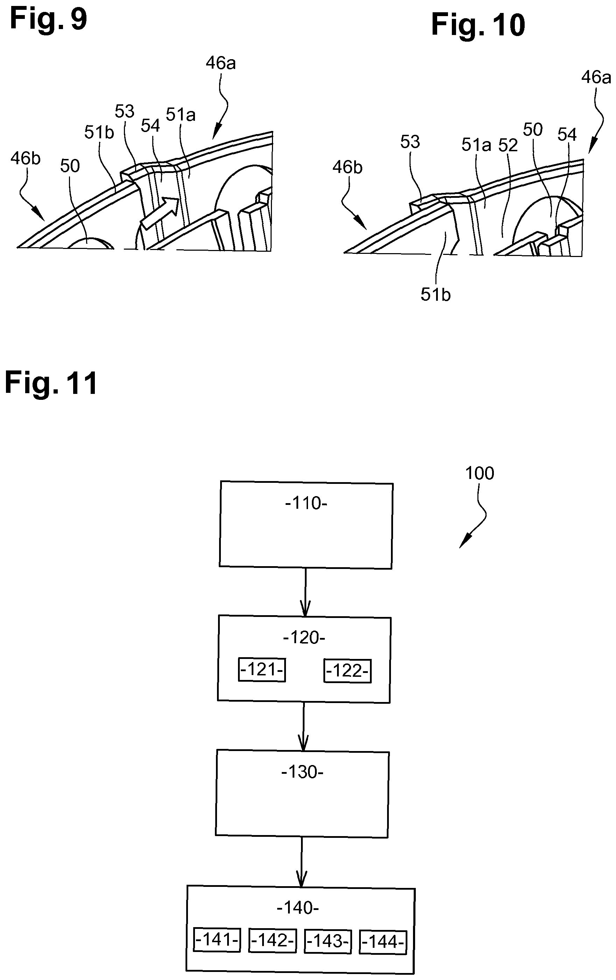

En référence à la figure 9, chaque secteur d'anneau s'emboîte dans un secteur d'anneau adjacent suivant une direction circonférentielle. En particulier, la première extrémité 51a circonférentielle du secteur d'anneau 46a comprend un rebord 53 qui réalise un élargissement de l'ouverture et de la paroi vers l'extérieur. Le rebord 53 s'étend circonférentiellement mais aussi transversalement. La deuxième extrémité 51b du secteur d'anneau 46b adjacent est destinée à s'engager à l'intérieur du rebord 53 du secteur d'anneau 46a de sorte que celui-ci l'entoure.

Nous allons maintenant décrire un procédé de montage de l'ensemble de turbomachine tel que décrit ci-dessus. Les principales étapes du procédé sont représentées sur la figure 11. Le procédé comprend les étapes suivantes :
- une étape 110 de fourniture d'un dispositif d'étanchéité, et
- une étape 120 de mise en place du dispositif d'étanchéité 14 au niveau des première et deuxième brides 16, 17 radiales pour entraver une circulation de fluide à travers l'accouplement à dentures.

Le procédé comprend également une étape de fourniture 130 d'un dispositif de fixation 15 et une étape 140 de montage du dispositif de fixation 15 sur la première et la deuxième bride 16, 17 radiale de manière à maintenir le dispositif d'étanchéité 14 et les première et deuxième brides radiales ensemble. L'étape de fourniture 130 peut être réalisée simultanément à l'étape 110 ou après l'étape 120.

Le dispositif d'étanchéité 14 et le dispositif de fixation 15 sont des pièces distinctes. Ceux-ci ont été fabriqués précédemment par des procédés de fabrication différents.

Dans le cadre du mode de réalisation illustré sur les figures 2 à 7, l'étape 120 de mise en place du dispositif d'étanchéité 14 comprend une sous-étape 121 de mise en place du dispositif d'étanchéité 14 (la tôle 27) dans la gorge 20 de la première bride 16. Dans le cas de la tôle 27, après mise en place de celle-ci, sa deuxième semelle 29b est à l'extérieur de la gorge 20. Le sommet 20 est en contact avec la première paroi 22 de la bride 16, le point extrême de la première semelle 29a est en contact avec la deuxième paroi 23 de la bride 16 et une portion de la première semelle 29a est également en appui contre la surface d'appui 31 courbe.

L'étape 140 de montage du dispositif de fixation 15 comprend une sous étape 141 d'insertion de la tige filetée 39 dans le trou 35 de la deuxième bride 17 telle que représentée sur la figure 5. Lors de cette étape, la tige filetée 39 (ici le goujon) est insérée dans le trou traversant de la deuxième bride 17 depuis la troisième surface 36 et suivant la flèche F. La tige 39 est insérée jusqu'à ce que le collet 41 soit en butée contre la troisième surface 36 ou le fond du lamage 42. La deuxième extrémité 44b du goujon s'étend du côté de la surface 37 de la deuxième bride 17. L'étape 140 comprend également une sous étape 142 de serrage de la tige filetée 39 sur la deuxième bride 17. Pour cela, le deuxième écrou 45b est vissé sur le filetage externe 40 de la tige filetée 39, et en particulier depuis la deuxième extrémité 44b de celle-ci, jusqu'à ce que sa face d'appui 45b1 repose sur la surface quatrième 37 de la deuxième bride 17. La tige filetée 39 est rendue solidaire de la deuxième bride.

L'étape 140 comprend une sous étape d'insertion 143 de la tige filetée 39 montée sur la deuxième bride 17, dans l'orifice 33 de la première bride 16, de manière que la deuxième bride soit en regard de la gorge 20. La tige filetée 39 est insérée du côté de la première surface 18 de la première bride 16. Après insertion, la première extrémité 44a de la tige 39 s'étend depuis la deuxième surface 19 de la première bride 16, et la troisième surface 36 de la deuxième bride 17 est en regard de la première surface 18 de la première bride 16.

L'étape 140 comprend une sous étape 144 de serrage de la tige filetée sur au moins la première bride 16. Le premier écrou 45a est à cet effet vissé sur le filetage externe de la tige filetée et en particulier sur la première extrémité 44a de celle-ci. Le premier écrou 45a est vissé jusqu'à ce que sa face d'appui 45a1 repose sur la deuxième surface 19 de la première bride 16. Pendant, le vissage/serrage, la première bride 16 se rapproche de la deuxième bride 17. De la sorte, les première et deuxième brides sont solidaires l'une de l'autre. De même, la deuxième bride 17 vient fermer la gorge 20 pour emprisonner et écraser la tôle 27 dans celle-ci. Par ailleurs, une face plane de la saillie 38 se trouve en butée contre une face plane de la nervure 26 pour réaliser une liaison appui plan. La portion de la deuxième semelle 29b est également en appui contre la surface d'appui 32 courbe de la deuxième bride 17. Nous voyons que la semelle 29a chevauche radialement à l'extérieur la liaison appui plan entre les brides 16, 17. De même, la gorge 20 est fermée par une portion de bride 17a (cf. figure 3), à l'extrémité libre 25b de celle-ci, qui présente une hauteur h3 au moins égale à la hauteur h2 de la gorge 20. La hauteur h3 est ici mesurée entre un plan de la face de l'extrémité libre et un plan parallèle passant par la saillie 38. Le dispositif d'étanchéité 14 et le dispositif de fixation 15 sont maintenus ensemble fermement sur les brides radiales 16, 17.

Dans le cas du mode de réalisation illustré sur les figures 8 à 10, l'étape 120 de mise en place du dispositif d'étanchéité 14 comprend une sous-étape 122 de mise en place du dispositif d'étanchéité 14 autour des première et deuxième brides 16, 17 radiales de manière à couvrir au moins les extrémité libres 25a, 25b des brides radiales 16, 17. Cette sous étape 122 consistant en particulier à l'engagement ou emboitement de chaque deuxième extrémité circonférentielle 51b d'un secteur d'anneau 46a, 46b, 46n du bouclier dans le rebord 53 élargi de la première extrémité circonférentielle 51a du secteur d'anneau adjacent suivant la direction circonférentielle. La deuxième extrémité 51b de chaque secteur d'anneau coulisse circonférentiellement à l'intérieur d'un rebord 53 puis vient en butée contre une paroi de fond 54 du rebord 53. La paroi ou zone d'appui de chaque secteur d'anneau présente une continuité de surface. Pour monter le dernier secteur d'anneau du bouclier 46, les secteurs d'anneau sont pivotés (légèrement) tangentiellement de manière à agrandir davantage l'espace vacant destiné à recevoir le dernier secteur d'anneau. A cet effet, toutes les extrémités circonférentielles 51a, 51b doivent être bien en butée contre les parois de fond 54 des rebords 53 respectifs. Ensuite, le dernier secteur d'anneau est glissé pour que sa deuxième extrémité circonférentielle 51b coulisse à l'intérieur d'un rebord 53 d'un secteur d'anneau adjacent et que son propre rebord 53, à sa première extrémité opposée, recouvre radialement une deuxième extrémité circonférentielle 51b d'un autre secteur d'anneau adjacent. Ensuite, le bouclier 46 annulaire complet est disposé autour des brides 16, 17 avec leurs extrémités libres en regard de la portion longitudinale 47 du bouclier 46.

L'étape 140 de montage du dispositif de fixation 15 comprend une sous étape d'insertion de la tige filetée dans les lumières 50, orifices 33 et trou 35 traversants. Lors de cette étape, la tige filetée (ici la vis) est insérée dans la lumière 50 de la deuxième branche 48b depuis la paroi 55. La tige 39 est insérée jusqu'à ce que la surface d'appui de la tête de vis soit en appui contre la paroi externe 55 de la deuxième branche 48b. Après insertion, l'extrémité distale de la vis s'étend depuis la paroi de la première branche du bouclier 46.

L'étape 140 comprend une sous étape de serrage de serrage de la vis sur les brides. Le deuxième écrou 45 est à cet effet vissé sur le filetage externe de la vis et en particulier du côté de l'extrémité distale. Le deuxième écrou est vissé jusqu'à ce que sa face d'appui 45a1 repose sur la paroi externe 55 de la première branche 48a du bouclier. Pendant, le vissage/serrage, les zones d'appui 49a, 49b du bouclier se rapprochent des deuxième et quatrième surfaces 19, 37 des brides 16, 17 pour réaliser l'étanchéité. Les première et deuxième brides sont solidaires l'une de l'autre également. Les dispositifs d'étanchéité et de fixation sont maintenus ensemble fermement sur les brides radiales.

Suivant une alternative, l'étape 140 peut comprendre les sous étapes 141 à 144 pour fixer et maintenir les dispositifs d'étanchéité et de fixation 14, 15 ensemble sur les brides 16, 17.

## Revendications

1. Ensemble de turbomachine 1 comprenant un premier élément (2) de rotor et un deuxième élément (3) de rotor qui s'étendent autour d'un axe longitudinal X et qui sont couplés l'un à l'autre par l'intermédiaire d'un accouplement à dentures (4) permettant la transmission de couple entre le premier et le deuxième éléments de rotor (2, 3), le premier élément (2) de rotor et le deuxième élément (3) de rotor comprenant respectivement une première bride (16) radiale et une deuxième bride (17) radiale qui sont annulaires et qui sont agencées en regard l'une de l'autre, **caractérisé en ce que** le premier élément (2) de rotor comprenant des dents (6) et le deuxième élément (3) de rotor comprenant des dents complémentaires (9), les dents (6) et dents complémentaires (9) s'étendant suivant l'axe longitudinal forment l'accouplement à dentures, et **en ce que** l'ensemble comprend un dispositif d'étanchéité (14) configuré de manière à assurer une étanchéité de l'accouplement à dentures (4) au niveau des première et deuxième brides (16, 17).

2. Ensemble de turbomachine (1) selon la revendication précédente, **caractérisé en ce qu'**il comprend un dispositif de fixation (15) configuré de manière à maintenir le dispositif d'étanchéité (14) et les première et deuxième brides (16, 17) fermement ensemble.

3. Ensemble de turbomachine (1) selon l'une des revendications précédentes, **caractérisé en ce que** la première bride (16) et la deuxième bride (17) s'étendent chacune radialement vers l'intérieur de l'accouplement à dentures (4).

4. Ensemble de turbomachine (1) selon l'une quelconque des revendications précédentes, **caractérisé en ce que** la première bride (16) comprend une gorge (20) ouverte sur une première surface (18) de celle-ci et le dispositif d'étanchéité (14) est destiné à être logé au moins en partie dans la gorge (20).

5. Ensemble de turbomachine (1) selon l'une des revendications précédentes, **caractérisé en ce que** le dispositif d'étanchéité (14) comprend une tôle (27) annulaire ondulée.

6. Ensemble de turbomachine (1) selon l'une quelconque des revendications 1 à 3, **caractérisé en ce que** le dispositif d'étanchéité (14) comprend un bouclier (46) annulaire destiné à couvrir au moins en partie des extrémités libres (25a, 25b) des première et deuxième brides (16, 17).

7. Ensemble de turbomachine (1) selon la revendication précédente, **caractérisé en ce que** le bouclier (46) comprend une forme générale en U, le bouclier (46) comprenant une portion longitudinale (47), une première branche (48a) et une deuxième branche (48b).

8. Ensemble de turbomachine (1) selon l'une des revendications 6 et 7, **caractérisé en ce que** le bouclier (46) comprend plusieurs secteurs d'anneau (46a, 46b, 46c, 46n) qui s'étendent chacun suivant une direction circonférentielle.

9. Ensemble de turbomachine (1) selon l'une quelconque des revendications précédentes, **caractérisé en ce que** le dispositif de fixation (15) comprend une tige filetée (39) destinée à traverser au moins un orifice (33) traversant de la première bride (16) et un trou (35) traversant de la deuxième bride (25), le dispositif de fixation(15) comprenant en outre des moyens de serrage (43) destinés à être montés sur la tige filetée (39) de manière à la rendre solidaire d'au moins une des première et deuxième brides (16, 17).

10. Ensemble de turbomachine (1) selon l'une des revendications 7 et 8, et selon la revendication 9, **caractérisé en ce que** la première branche (48a) et la deuxième branche (48b) comprennent une pluralités de lumières (50) qui sont destinées à être traversées par la tige filetée (39), la première branche (48a) et la deuxième branche (48b) comprenant des zones d'appui (49a, 49b) reposant chacune respectivement sur une deuxième surface (19 ; 37) de la première bride (16) et de la deuxième bride (17).

11. Turbomachine d'aéronef comprenant au moins un ensemble de turbomachine (1) selon l'une quelconque des revendications précédentes.

12. Procédé de montage d'un ensemble de turbomachine (1) selon l'une quelconque des revendications 1 à 10, **caractérisé en ce qu'**il comprend :
- une étape (110) de fourniture du dispositif d'étanchéité (14), et
- une étape (120) de mise en place du dispositif d'étanchéité (14) au niveau des première et deuxième brides (16, 17) radiales pour entraver une circulation de fluide à travers l'accouplement à dentures (4).

13. Procédé de montage selon la revendication précédente, **caractérisé en ce qu'**il comprend :
- une étape (130) de fourniture du dispositif de fixation (15) et
- une étape (140) de montage du dispositif de fixation (15) sur la première bride (16) et la deuxième bride (17) de manière à maintenir fermement le dispositif d'étanchéité (14) et les première et deuxième brides (16, 17) fermement ensemble.

14. Procédé de montage selon la revendication 4 et l'une des revendications 12 et 13, **caractérisé en ce que** l'étape (120) de mise en place du dispositif d'étanchéité (14) au niveau des première et deuxième brides (16, 17), comprend une sous étape (121) de mise en place du dispositif d'étanchéité (14) dans la gorge (20) de la première bride (16).

15. Procédé de montage selon la revendication 6 et l'une des revendications 12 et 13, **caractérisé en ce que** l'étape (120) de mise en place du dispositif d'étanchéité (14) au niveau des première et deuxième brides (16, 17), comprend une sous-étape (122) de mise en place du dispositif d'étanchéité (14) autour des première et deuxième brides (16, 17) radiales de manière à couvrir au moins les extrémités libres (25a, 25b) des première et deuxième brides (16, 17).

## Patentansprüche

1. Turbotriebwerksanordnung 1, die ein erstes Rotorelement (2) und ein zweites Rotorelement (3) umfasst, die sich um eine Längsachse X erstrecken und die mittels einer Zahnkupplung (4), die die Drehmomentübertragung zwischen dem ersten und dem zweiten Element (2, 3) ermöglicht, miteinander gekoppelt sind, wobei das erste Rotorelement (2) und das zweite Rotorelement (3) jeweils einen ersten Radialflansch (16) und einen zweiten Radialflansch (17) umfassen, die ringförmig sind und die einander zugewandt angeordnet sind, **dadurch gekennzeichnet, dass** das erste Rotorelement (2) Zähne (6) umfasst und das zweite Rotorelement (3) komplementäre Zähne (9) umfasst, wobei die Zähne (6) und komplementäre Zähne (9), die sich entlang der Längsachse erstrecken, die Zahnkupplung bilden, und dadurch, dass die Anordnung eine Dichtungsvorrichtung (14) umfasst, die so konfiguriert ist, dass sie eine Dichtigkeit der Zahnkupplung (4) im Bereich des ersten und des zweiten Flansches (16, 17) gewährleistet, wobei die Befestigungsvorrichtung (15) so konfiguriert ist, dass sie die Dichtungsvorrichtung (14) und den ersten und den zweiten Flansch (16, 17) fest zusammenhält.

2. Turbotriebwerksanordnung (1) nach dem vorstehenden Anspruch, **dadurch gekennzeichnet, dass** sie eine Befestigungsvorrichtung (15) umfasst, die so konfiguriert ist, dass sie die Dichtungsvorrichtung (14) und den ersten und den zweiten Flansch (16, 17) fest zusammenhält.

3. Turbotriebwerksanordnung (1) nach einem der vorstehenden Ansprüche, **dadurch gekennzeichnet, dass** sich der erste Flansch (16) und der zweite Flansch (17) jeweils radial zur Innenseite der Zahnkupplung (4) erstrecken.

4. Turbotriebwerksanordnung (1) nach einem der vorstehenden Ansprüche, **dadurch gekennzeichnet, dass** der erste Flansch (16) eine Nut (20) umfasst, die an einer ersten Fläche (18) desselben offen ist, und die Dichtungsvorrichtung (14) dazu bestimmt ist, mindestens zum Teil in der Nut (20) untergebracht zu werden.

5. Turbotriebwerksanordnung (1) nach einem der vorstehenden Ansprüche, **dadurch gekennzeichnet, dass** die Dichtungsvorrichtung (14) ein ringförmiges Wellblech (27) umfasst.

6. Turbotriebwerksanordnung (1) nach einem der Ansprüche 1 bis 3, **dadurch gekennzeichnet, dass** die Dichtungsvorrichtung (14) einen ringförmigen Schild (46) umfasst, der dazu bestimmt ist, freie Enden (25a, 25b) des ersten und des zweiten Flansches (16, 17) mindestens zum Teil abzudecken.

7. Turbotriebwerksanordnung (1) nach dem vorstehenden Anspruch, **dadurch gekennzeichnet, dass** der Schild (46) eine allgemeine U-Form umfasst, wobei der Schild (46) einen Längsabschnitt (47), einen ersten Schenkel (48a) und einen zweiten Schenkel (48b) umfasst.

8. Turbotriebwerksanordnung (1) nach einem der Ansprüche 6 und 7, **dadurch gekennzeichnet, dass** der Schild (46) mehrere Ringsektoren (46a, 46b, 46c, 46n) umfasst, die sich jeweils in einer Umfangsrichtung erstrecken.

9. Turbotriebwerksanordnung (1) nach einem der vorstehenden Ansprüche, **dadurch gekennzeichnet, dass** die Befestigungsvorrichtung (15) eine Gewindestange (39) umfasst, die dazu bestimmt ist, durch mindestens eine Durchgangsöffnung (33) des ersten Flansches (16) und ein Durchgangsloch (35) des zweiten Flansches (25) hindurchzugehen, wobei die Befestigungsvorrichtung (15) weiter Spannmittel (43) umfasst, die dazu bestimmt sind, an der Gewindestange (39) montiert zu werden, um diese mit mindestens einem des ersten und des zweiten Flansches (16, 17) fest zu verbinden.

10. Turbotriebwerksanordnung (1) nach einem der Ansprüche 7 und 8, und nach Anspruch 9, **dadurch gekennzeichnet, dass** der erste Schenkel (48a) und der zweite Schenkel (48b) eine Vielzahl von Öffnungen (50) umfassen, die dazu bestimmt sind, von der Gewindestange (39) durchquert zu werden, wobei der erste Schenkel (48a) und der zweite Schenkel (48b) Auflagebereiche (49a, 49b) umfassen, die jeweils auf einer zweiten Fläche (19; 37) des ersten Flansches (16) bzw. des zweiten Flansches (17) ruhen.

11. Turbotriebwerk für ein Luftfahrzeug, das mindestens eine Turbotriebwerksanordnung (1) nach einem der vorstehenden Ansprüche umfasst.

12. Verfahren zum Montieren einer Turbotriebwerksanordnung (1) nach einem der Ansprüche 1 bis 10, **dadurch gekennzeichnet, dass** es umfasst:
- einen Schritt (110) des Bereitstellens der Dichtungsvorrichtung (14), und
- einen Schritt (120) des Anbringens der Dichtungsvorrichtung (14) im Bereich des ersten und des zweiten Radialflansches (16, 17), um eine Fluidströmung durch die Zahnkupplung (4) zu verhindern.

13. Montageverfahren nach dem vorstehenden Anspruch, **dadurch gekennzeichnet, dass** es umfasst:
- einen Schritt (130) des Bereitstellens der Befestigungsvorrichtung (15), und
- einen Schritt (140) des Montierens der Befestigungsvorrichtung (15) am ersten Flansch (16) und dem zweiten Flansch (17), um die Dichtungsvorrichtung (14) und den ersten und den zweiten Flansch (16, 17) fest zusammenzuhalten.

14. Montageverfahren nach einem der Ansprüche 12 und 13, **dadurch gekennzeichnet, dass** der Schritt (120) des Anbringens der Dichtungsvorrichtung (14) im Bereich des ersten und des zweiten Flansches (16, 17) einen Teilschritt (121) des Anbringens der Dichtungsvorrichtung (14) in der Nut (20) des ersten Flansches (16) umfasst.

15. Montageverfahren nach einem der Ansprüche 12 und 13, **dadurch gekennzeichnet, dass** der Schritt (120) des Anbringens der Dichtungsvorrichtung (14) im Bereich des ersten und des zweiten Flansches (16, 17) einen Teilschritt (122) des Anbringens der Dichtungsvorrichtung (14) um den ersten und den zweiten Radialflansch (16, 17) herum umfasst, um mindestens die freien Enden (25a, 25b) des ersten und des zweiten Flansches (16, 17) abzudecken.

## Claims

1. A turbine engine assembly (1) comprising a first rotor element (2) and a second rotor element (3) which extend about a longitudinal axis X and which are coupled to one another by means of a toothed coupling (4), allowing transmission of the torque between the first and the second rotor elements (2, 3), the first rotor element (2) and the second rotor element (3) respectively comprising a first radial flange (16) and a second radial flange (17) which are annular and which are arranged opposite one another, **characterised in that** the first rotor element (2) comprising teeth (6) and the second rotor element (3) comprising complementary teeth (9), the teeth (6) and complementary teeth (9) extending along the longitudinal axis form the toothed coupling, and **in that** the assembly comprises a sealing device (14) configured so as to ensure a sealing of the toothed coupling (4) at the level of the first and second flanges (16, 17).

2. The turbine engine assembly (1) according to the preceding claim, **characterised in that** it comprises an attachment device (15) configured so as to hold the sealing device (14) and the first and second flanges (16, 17) firmly together.

3. The turbine engine assembly (1) according to any of the preceding claims, **characterised in that** the first flange (16) and the second flange (17) each extend radially inwardly of the toothed coupling (4).

4. The turbine engine assembly (1) according to any one of the preceding claims, **characterised in that** the first flange (16) comprises a groove (20) open to a first surface (18) thereof and the sealing device (14) is intended to be housed at least partly within the groove (20).

5. The turbine engine assembly (1) according to any of the preceding claims, **characterised in that** the sealing device (14) comprises an annular corrugated sheet-metal (27).

6. The turbine engine assembly (1) according to any one of claims 1 to 3, **characterised in that** the sealing device (14) comprises an annular shield (46) intended to cover at least partly free ends (25a, 25b) of the first and second flanges (16, 17).

7. The turbine engine assembly (1) according to the preceding claim, **characterised in that** the shield (46) comprises a general U-shape, the shield (46) comprising a longitudinal segment (47), a first branch (48a) and a second branch (48b).

8. The turbine engine assembly (1) according to any of claims 6 and 7, **characterised in that** the shield (46) comprises a plurality of annulus sectors (46a, 46b, 46c, 46n) which each extend along a circumferential direction.

9. The turbine engine assembly (1) according to any of the preceding claims, **characterised in that** the attachment device (15) comprises a threaded rod (39) intended to pass through at least one orifice (33) passing through the first flange (16) and one hole (35) passing through the second flange (25), the attachment device (15) further comprising tightening means (43) intended to be mounted on the threaded rod (39) so as to make it secured to at least one of the first and second flanges (16, 17).

10. The turbine engine assembly (1) according to one of claims 7 and 8, and according to claim 9, **characterised in that** the first branch (48a) and the second branch (48b) comprise a plurality of slits (50) which are intended to be passed through by the threaded rod (39), the first branch (48a) and the second branch (48b) comprising bearing areas (49a, 49b) each resting respectively on a second surface (19; 37) of the first flange (16) and of the second flange (17).

11. An aircraft turbine engine comprising at least one turbine engine assembly (1) according to any of the preceding claims.

12. A method for mounting a turbine engine assembly (1) according to any one of claims 1 to 10, **characterised in that** it comprises:
- a step (110) of providing the sealing device (14), and
- a step (120) of placing the sealing device (14) at the level of the first and second radial flanges (16, 17) to impede a fluid circulation through the toothed coupling (4).

13. The mounting method according to the preceding claim, **characterised in that** it comprises:
- a step (130) of providing the attachment device (15) and
- a step (140) of mounting the attachment device (15) to the first flange (16) and the second flange (17) so as to hold the sealing device (14) and the first and second flanges (16, 17) firmly together.

14. The mounting method according to one of claims 12 and 13, **characterised in that** the step (120) of placing the sealing device (14) at the level of the first and second flanges (16, 17) comprises a sub-step (121) of placing the sealing device (14) in the groove (20) of the first flange (16).

15. The mounting method according to one of claims 12 and 13, **characterised in that** the step (120) of placing the sealing device (14) at the level of the first and second flanges (16, 17) comprises a sub-step (122) of placing the sealing device (14) around the first and second radial flanges (16, 17) so as to cover at least the free ends (25a, 25b) of the first and second flanges (16, 17).
